# EUROPÄISCHE PATENTANMELDUNG

(11) **EP 0 634 648 A1**
(43) Veröffentlichungstag der Anmeldung: **18.01.1995**
(21) Anmeldenummer: 94104585.8
(22) Anmeldetag: 23.03.1994
(51) Int. Cl.: G01N 21/89

(54) **Erfassungseinheit für die optronische Oberflächeninspektion**

(30) Priorität: 15.07.1993 DE 9310554 U
(71) Anmelder: AUTRONIC Gesellschaft für Bildverarbeitung und Systeme mbH, D-76229 Karlsruhe (DE)
(72) Erfinder: Drixler, Bernhard, Dipl.-Ing., D-76676 Graben-Neudorf (DE); Rohner, Joachim, D-76227 Karlsruhe (DE)
(74) Vertreter: Hofmann, Gerhard, Dipl.-Ing. Patentassessor

(57) **Zusammenfassung**

Eine Erfassungseinheit (20) als Scan-Box für die optronische Inspektion einer Oberfläche (12) längs einer Folge nebeneinander versetzter paralleler Streifen, insbesondere zur Klassifikation schnell bewegter Werkstücke (11) wie gehobelter Profilbretter, weist ein Gehäuse (19) mit einer Lichtkammer (21.3) und einer parallel dazu sich erstreckenden Sensorkammer (21.4) zur Aufnahme eines Sensors (15) etwa in Form einer Zeilenkamera mit langer Brennweite auf. Die von der Aufnahmerichtung (16) orthogonal durchsetzte Blicköffnung (22.5) und die von der Bestrahlungsrichtung (17) orthogonal durchsetzte Lichtöffnung (22.6) im Gehäuse (19) sind mittels Glasplatten (24) verschlossen, die zwischeneinander einen stumpfen Winkel einschließen, so daß die streifenförmigen Strahlen sich in einem Fokus an der Oberfläche (12) schneiden, die dadurch bei orthogonaler Aufnahmerichtung (16) eine schräge Bestrahlungsrichtung (17) erfährt, um kontrastarme Oberflächen-Fehler wie Vertiefungen, Erhöhungen und Öffnungen von nicht direkt durchblickbaren Löchern durch kleine Schattenränder zuverlässiger zu erfassen. Die Lichtquelle (18) kann mit hochfrequenzgespeisten Leuchtstoffröhren (32) vor einem gestreckt-wannenförmigen Hohlreflektor (31) bestückt sein; zweckmäßiger jedoch mit wenigstens einem punktförmigen (oder mit einem gestreckten) gleichspannungs-betriebenen Halogenstrahler mit Reflektor. Vorzugsweise erfolgt eine Strahlumlenkung in der Lichtkammer (21.3), um einen großen Abstand zwischen Strahler (33) und Glasplatte (24) zu erzielen und die Verlustwärme mittels eines Gebläses (35) für eine Zwangs-Umluft (40) durch die Kammern (21) innerhalb des explosionssicher gekapselten Gehäuses (19) abführen zu können.

## Beschreibung

Eine solche Einheit ist im eigenen älteren Gebrauchsmuster G 92 02 306 beschrieben. Dort sind am Rande eines gewölbten Reflektors Lichtquellen zu diffuser aber im wesentlichen gerichteter, großflächiger Bestrahlung eines Objektes angeordnet, dessen Konturen in Abstrahlrichtung des Reflektors mittels einer als optronischem Sensor dienenden Kamera hinter einer Öffnung im Zentrum des Reflektors aufgenommen werden. Diese Beleuchtung stellt sicher, daß alle Teilkonturen gleich ausgeleuchtet werden, also bei der Aufnahme keine beleuchtungsbedingte Verfälschung durch schattenbedingte Verstärkungen oder Überdeckungen auftritt.

Für eine rasche Oberflächen-Inspektion durch dicht gestaffeltes z. B. zeilenförmiges Abtasten quer zur relativen Bewegungsrichtung zwischen Werkstück und Sensor ist eine solche Bestrahlung aber wenig sinnvoll, weil dann nur ein von einer Zeilenkamera gerade aufgenommener zeilenförmiger Bereich inmitten der breit ausgestrahlten Fläche Informationen erbringt. Auch ist eine zur Aufnahmerichtung koaxiale Bestrahlungsrichtung zwar zweckmäßig für die Erfassung gegeneinander kontrastierender Konturen und für die Detektion von in Aufnahmerichtung das Werkstück durchsetzenden Löchern. Dagegen stellen sich Detektionsprobleme ein, wenn es sich statt eines durchgehenden Loches nur um eine Vertiefung handelt, bzw. wenn das Loch das Werkstück so stark geneigt gegenüber der Aufnahmerichtung durchquert, daß sich kein freies Blickfeld durch das Loch hindurch ergibt. Fehlerstrukturen dieser Art, aber auch Informationen über die Oberflächenrauhigkeit, sind deshalb mit der vorstehend erwähnten konzentrischen Anordnung von Lichtquelle und Sensor schwer bis gar nicht zu erfassen.

Aus dem Buch Computer Control Systems For Log Processing And Lumber Manufacturing (Miller Freeman Publications, San Francisco, 1985) von Ed M. Williston, dort Erläuterung zu Fig. 12-1 auf den Seiten 229/230, ist es bekannt, zur meßtechnischen Erfassung des Waldkanten-Verlaufes von Brettern diese von einander gegenüberliegenden Richtungen aus jeweils so schräg anzustrahlen, daß sich längs der Kante ein deutlicher Schattenwurf als kontrastreiche Begrenzungslinie für die optronische Breitenvermessung einstellt. Dabei erfolgt die Bestrahlung zweckmäßigerweise gleich über eine größere Distanz in Richtung der Brett-Länge. Die Bretter-Oberfläche erfährt Beleuchtungen unter Überlagerung der beiden entgegengesetzt geneigten Bestrahlungs-Richtungen, so daß sich dort insgesamt wieder die oben schon erörterte diffuse Beleuchtung mit einer resultierenden Komponente einstellt, die im wesentlichen koaxial zur Aufnahmerichtung des optronischen Sensors quer zur Werkstück-Oberfläche orientiert ist.

Der Erfindung dagegen liegt die Aufgabe zugrunde, eine kompakte, leicht nachträglich in den produktionsablauf integrierbare Erfassungseinheit für die optronische Oberflächeninspektion, insbesondere zur Klassifikation schnell bewegter Werkstücke, zu schaffen, mit der auch an sich kontrastarme Oberflächen-Fehlstellen von unterschiedlichen Sensor-Charakteristiken zuverlässig erfaßbar sind.

Diese Aufgabe ist erfindungsgemäß im wesentlichen dadurch gelöst, daß die gattungsgemäße Erfassungseinheit nach dem Anspruch 1 ausgelegt ist.

Nach dieser Lösung ist ein stabiles, kompaktes und dadurch logistisch unproblematisches Gehäuse mit zueinander parallelen, zum Bestückungsaustausch über die breiten Seitenwände gut zugänglichen Sensor- und Lichtkammern ausgestaltet, die in Richtung auf die zu inspizierende und relativ dazu bewegte Werkstück-Oberfläche mit einer gegenüber der Blicköffnung geneigten Lichtöffnung abschließen. Das erbringt eine gegenüber der Aufnahmerichtung geneigte Bestrahlungsrichtung. Bei Einsatz eines Zeilensensors sind die Charakteristiken der Beleuchtung und der Sensorapertur in Richtung des Werkstückvorschubs schmal und quer dazu breit (also nicht strahl- sondern linien- oder streifenförmig), und sie schneiden sich somit längs einer Linie auf der interessierenden Werkstück-Oberfläche. Die gesamte Beleuchtungsintensität ist auf diese Aufnahmezeile quer zur Werkstückbewegung konzentriert. Gegenüber der orthogonalen Blickrichtung gegen die Werkstück-Oberfläche ist die Bestrahlungsrichtung so geneigt, daß mit einem einzigen Aufbau sowohl kontrastreiche Strukturen wie auch kontrastarme Fehlstellen (wie Vertiefungen oder Lochansätze, aber auch Oberflächenrauhigkeiten) zuverlässig erfaßbar sind, die zu nur kleinen lokalen Schattenwürfen führen.

Das Gehäuse mit hinsichtlich Lichtquelle und Sensor einsatzfertig justierter Ausstattung enthält außerdem ein Netzteil zu deren Betrieb und eine Schnittstelle für die Auswertung der vom Sensor aufgenommenen Informationen. Diese kompakte, dabei in Abtast- und Transportrichtung vergleichsweise schmale Erfassungseinheit kann bedarfsweise an beliebiger Stelle des Fabrikationsablaufes installiert werden, nämlich der zu inspizierenden Werkstück-Oberfläche gegenüber in einem Abstand, der durch den Schnitt von Aufnahme- und Bestrahlungsrichtungen bestimmt ist, etwa unterhalb einer Rollenbahn zum in Längsrichtung erfolgenden Abtransport gehobelter Profilbretter oder gegossener Kunststoff- und Metallteile. Die Erfassungeinheit kann bedarfsweise mit unterschiedlichen Sensoren ausgestattet werden, so statt mit Linien- auch mit Punkt- oder Flächenkameras, mit Farbsensoren oder mit aktiven Sensoren (zur Laser- oder Radarabtastung) und mit Zusatzsensoren wie Lichtschranken zum Feststellen des Anfangs und des Endes eines Werkstückes, mit Geschwindigkeitsmessern für die Musterlängenauswertung oder mit Überwachungssensoren für Ausfall der Beleuchtung oder kritische Erwärmung der Werkstück-Oberfläche.

Die Lichtquelle kann für die Zeileninspektion mit hochfrequenz-gespeisten Leuchtstoffröhren in einem halb-hohlzylindrischen Reflektor bestückt sein, um ohne große Wärmeentwicklung einen schwebungsfrei ausgeleuchteten Streifen konzentrisch zu einer vom Sensor an der Werkstück-Oberfläche erfaßten Zeile bei schrägem Lichteinfall zu bestrahlen. Allerdings ergeben solche Kaltlicht-Edelgasröhren schon an sich keine hohe Lichtdichte, und die achsparalle Anordnung im halbzylindrischen Hohlreflektor erbringt aus Gründen der geometrischen Optik auch keinen eindeutig fokussierten, schmalen Beleuchtungsstreifen auf der zu inspizierenden Oberfläche.

Wegen ihrer hohen und konstanten Lichtenergie ist der Einsatz von gleichstromgespeisten Halogen-Strahlern mit integrierter Fokussierung zweckmäßiger. Zwei oder mehr Punktstrahler werden entsprechend der Sensor-Aufnahmecharakteristik gruppiert. Für einen Zeilensensor sind mehrere konzentrierte Niedervoltlampen parallel zu dessen Orientierung nebeneinander angeordnet. Es kann aber auch eine einzige hochspannungsgespeiste Hochleistungs-Halogenröhre in dieser Orientierung eingebaut sein, wie sie in Flutlichtstrahlern zur Baustellen-Ausleuchtung Einsatz findet. Zur Vermeidung von die Bildaufnahme störenden Schwebungen ist allerdings eine Gleichstromspeisung empfehlenswert. Die ist durch Gleichrichtung einer dreiphasigen Wechselspannung preisgünstig verfügbar, da der Phasenversatz eine nur geringe Restwelligkeit erbringt, die aufgrund der thermischen Trägheit der Röhre dann nicht mehr stört. Um die Einstellung der Fokuslinie variieren zu können, ist die Röhre zweckmäßigerweise relativ zur Längsachse (nämlich quer dagegen) einstellbar.

Wegen der außerordentlich hohen Hitzeentwicklung von punktförmigen oder linienförmigen Halogenlampen werden diese zweckmäßigerweise nicht direkt hinter der die Lichtkammer an ihrer Lichtöffnung abschließenden Glasplatte, sondern in größerem Abstand dazu angeordnet, um durch größeres Luftvolumen zwischen Halogenlampe und Glasplatte eine größere Wärmekapazität und verbesserte Möglichkeiten der Wärmeabfuhr sicherzustellen. Eine zusätzliche Zwangs-Luftumwälzung mittels eines eingebauten Gehäuses ist zweckmäßig. Damit trotz abseits montierter Halogenlampe ein möglichst senkrechter Lichtdurchtritt durch die Glasplatte (mit gegenüber der Sensor-Aufnahmerichtung wie beschrieben geneigter Bestrahlungsrichtung) erfolgt und dadurch Reflexionen und Streuungen an der Glasplatte weitgehend vermieden werden, ist dann wenigstens eine transmissive oder reflektive Umlenkoptik in der Lichtkammer vorgesehen. Die Strahlumlenkung kann über ein Prisma erfolgen, aber der Einsatz eines Spiegels bringt weniger thermisch-konstruktive Probleme mit sich.

Eine wesentliche Steigerung durch Fokussierung des Lichtbereiches auf die Aufnahmeregion an der Inspektions-Oberfläche ist noch dadurch erzielbar, daß die Glasplatte am Abschluß der Lichtkammer durch eine der Abtastgeometrie angepaßte Linse ersetzt oder ergänzt wird. Eine Halbzylinderlinse erlaubt wegen erhöhter Lichtdichte im schmalen Erfassungsstreifen quer zur Fortbewegung des von einer Zeilenkamera abgetasteten Werkstückes eine Reduzierung der elektrischen Leistung des eingebauten Halogenstrahlers und damit eine wesentliche Verringerung der Verlustwärmeentwickung im hermetisch geschlossenen Gehäuse. Dieser Vorteil läßt sich auch durch eine in die Lichtkammer vor der Halogen-Lichtquelle eingebaute transmissive oder reflekive Fokussierung erzielen; im Falle einer transmissiven Fokussierung mit einer Linse läßt sich die Verlustwärmeabfuhr aber bei externer Anordnung auf der oder anstelle der Glasplatte günstiger realisieren, wenn nicht die Effekte der Strahlumlenkung und der Fokussierung innerhalb der Lichtkammer konstruktiv zusammengefaßt werden sollen. Die hinsichtlich der Sensorgeometrie wünschenswerte Bestrahlungsgeometrie an der Werkstück-Oberfläche läßt sich schließlich auch durch Querschnittstransformation mittels Lichtleitern realisieren.

Zusätzliche Alternativen und Weiterbildungen sowie weitere Merkmale und Vorteile der Erfindung ergeben sich aus den weiteren Ansprüchen und, auch unter Berücksichtigung der Darlegungen in der nachgeheften Zusammenfassung, aus nachstehender Beschreibung von in der Zeichnung unter Beschränkung auf das Wesentliche stark abstrahiert skizzierten bevorzugten Realisierungsbeispielen zur erfindungsgemäßen Lösung. In der Zeichnung zeigt:
- Fig. 1: den Einsatz einer erfindungsgemäß ausgestalteten Erfassungseinheit im Einsatz unter der Rollenbahn für den Abtransport gestreckter Werkstücke im Längsschnitt und
- Fig. 2: ein hinsichtlich der Lichtquelle und zusätzlicher Lüftungsmaßnahmen abgewandeltes Ausführungsbeispiel für die Erfassungseinheit.

Bei den Werkstücken 11, deren an sich ebene Oberflächen 12 beispielsweise zu Klassifikationszwecken oder allgemein zur Qualitätskontrolle optronisch inspiziert werden sollen, kann es sich um in Transportrichtung 13 gestreckte Gußteile aus Kunststoff oder Metall handeln, die etwa Oberflächenfehler in Form von Lunkern und schlecht abgetrennten Angüssen aufweisen können. Bevorzugt handelt es sich aber um gehobelte Bretter und Balken, die nach Fehlstellen 14 insbesondere in Form von durchgehenden (Ast-)Löchern, größeren Vertiefungen und farblich gegenüber der Umgebung kontrastierenden Harz- oder Astflecken zu klassifizieren sind. Während Fehlstellen 14 mit starkem Helligkeitskontrast gegenüber ihrer Umgebung vergleichsweise zuverlässig von einem optronischen Sensor 15, vorzugsweise einer Zeilenkamera, erfaßt werden, wenn die Oberfläche 12 in Relativbewegung zwischen Werkstück 11 und Sensor 15 abgetastet wird, sind bloße Vertiefungen 14.1 ohne Farbkontrast zur Umgebung wesentlich schwieriger zu erfassen. Das gilt entsprechend für Löcher 14.2, die im Verhältnis zu ihrem Durchmesser bzw. zur Höhe des Werkstückes 11 so stark geneigt gegenüber der Oberfläche 12 verlaufen, daß sich aus geometrischen Gründen nicht die kontrastreiche Durchblick-Situation in Aufnahmerichtung ergibt.

Deshalb ist die Bestrahlungsrichtung 17 um etwa 45° (gemessen entgegen der Transportrichtung 13) gegenüber der zu inspizierenden Oberfläche 12 und dementsprechend auch um etwa 45° gegenüber der quer zur Oberfläche 12 orientierten Aufnahmerichtung 16 geneigt. Das ergibt stets am Rande von Vertiefungen 14.1 und von Löchern 14.2 der Bestrahlungsrichtung 17 gegenüber und damit in Transportrichtung 13 einen kleinen Schattenwurf und somit einen problemlos erfaßbaren Fehlstellen-Kontrast auch ohne Durchblick Verhältnisse.

Die Lichtquelle 18 für die Bestrahlungsrichtung 17 befindet sich im zweigeteilten Gehäuse 19 einer optoelektronischen Abtast- oder Erfassungseinheit 20, in der parallel zu einer Lichtkammer 21.3 eine nicht ganz so lange Sensorkammer 21.4 ausgebildet ist. Die Kammern 21 sind in Aufnahmerichtung 16 gestreckt. Der Sensor 15 ist der Blicköffnung 22.5 gegenüber im entlegenen Bereich der Sensorkammer 21.4 angeordnet, um einen möglichst großen Objektabstand zu erzielen, damit bei Einsatz eines Tele-Zwischenringes an der Optik 23 eines Zeilen-Sensors 15 die Oberfläche 12 über die gesamte Werkstück-Breite quer zur Transportrichtung 13 erfaßt werden kann. Der große Abstand erbringt auch optimale Abbildungsverhältnisse hinsichtlich Tiefenschärfe und weitgehende Unabhängigkeit von der an sich nach dem Cosinusgesetz schwankenden Intensität der Beleuchtungs-Rückstrahlung an der inspizierten Oberfläche 12.

Entsprechend dem Winkel zwischen den streifenförmigen Aufnahme und Bestrahlungsrichtungen 16-17 geneigt gegenüber der Blicköffnung 12.5 ist der benachbarte Bereich der Lichtkammer 21.3 mit einer Lichtöffnung 22.6 abgeschlossen. Beide Öffnungen 22 sind mit am Gehäuse 19 eingefaßten, planparallelen Glasplatten 24 staubdicht verschlossen. Sie sind unter stumpfem Winkel zueinander orthogonal zu den Aufnahme- bzw. Bestrahlungsrichtungen 16, 17 orientiert, um in der Objektabbildung bzw. beim Lichtdurchtritt Streuungen und Reflexionen an den Glasplatten 24 zu vermeiden, die sich sonst den auszuwertenden Oberflächenmustern störend überlagern könnten.

Der Sensor 15 ist über ein Interface 25 an eine Auswerteschaltung etwa der Art angeschlossen, wie sie in der Publikation "Real time surface grading of profiled wooden boards" von W. Pölzleitner und G. Schwingshakl in INDUSTRIAL METROLOGY Vol. 2, Nos. 3-4, 1992, pp. 283 - 298, insbesondere zur Klassifikation gehobelter Profilbretter ausführlich beschrieben ist. Eine solche Auswerteschaltung kann eine Steuerungsinformation 26 an einen Sorter 27 liefern, bei dem es sich wie skizziert einfach um einen einstellbaren Anschlag 28 vor einem Querförderer 29 für Abtransport der inspizierten Werkstücke 11 oder auch um eine vollautomatische Sortierweiche handeln kann. Das vergleichsweise schwere Netzteil 30 für die Betriebsversorgung des Sensors 15 samt Interface 25 und insbesondere für die Leistungsversorgung der Lichtquelle 18 ist bei Auslegung der Erfassungseinheit 20 als Boden-Stand-Gerät aus Stabilitätsgründen vorzugsweise der Lichtöffnung 22.6 gegenüber im unteren Bereich der Lichtkammer 21.3 angeordnet.

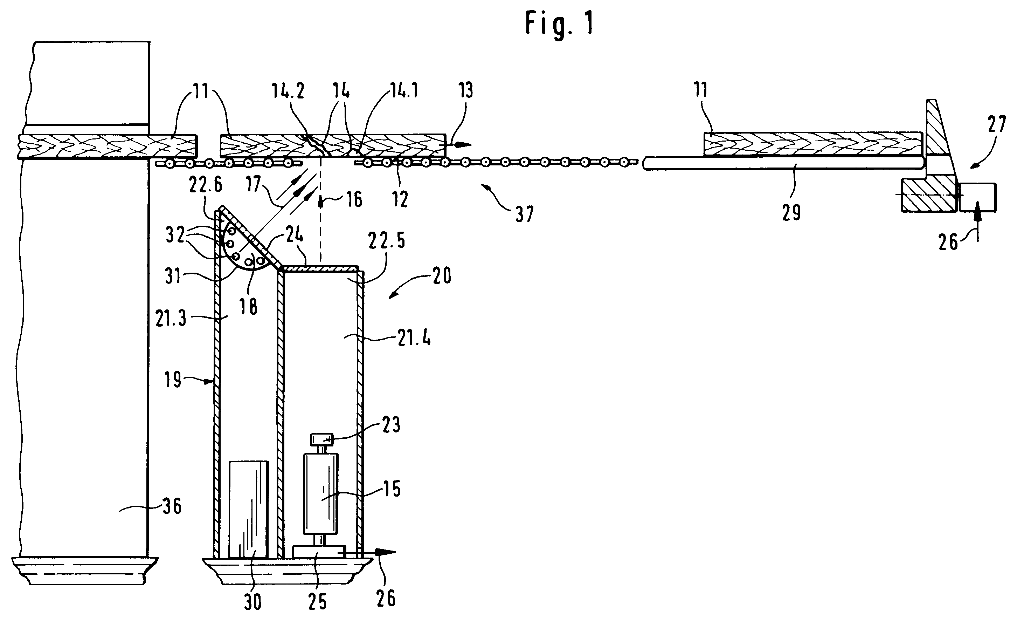

Beim Netzteil 30 handelt es sich insbesondere um einen Frequenzwandler, wenn die Lichtquelle 18 in einem wannenförmig-hohlzylindrischen Reflektor 31 mit parallel zur Reflektorachse (und somit entsprechend dem schmalen an der Oberfläche 12 von einer Zeilenkamera aufgenommenen Streifen quer zur Darstellebene der Fig. 1) sich erstreckenden Kaltlicht-Leuchtstoffröhren 32 bestückt ist. Die werden zur Vermeidung optischer Schwebungserscheinungen mit einer Hochfrequenz in der Größenordnung einiger zehn KHz betrieben. Solche Edelgas-Leuchtstoffröhren 32 zeichnen sich durch lange Lebensdauer und geringe Verlustwärme aus, liefern allerdings für manche Anforderungen an die Oberflächeninspektion (zumal unter Berücksichtigung der Maserungsmuster bei gehobeltem Holz) nicht das ideale Strahlungsspektrum und die ideale Strahlengeometrie.

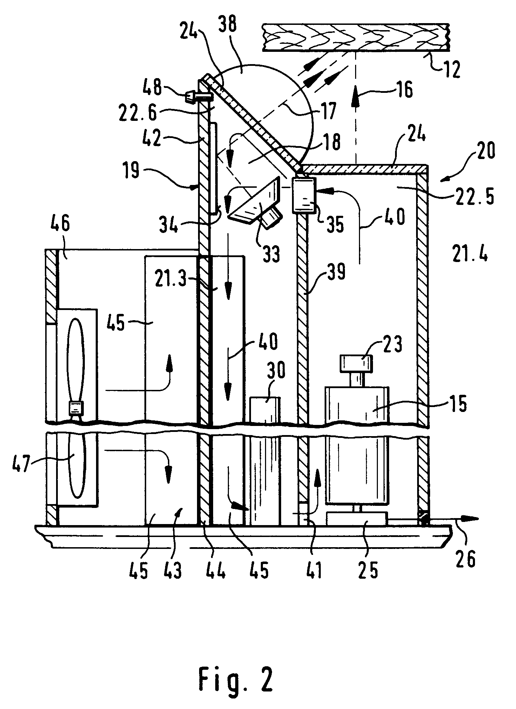

Auch mit einer Steigerung der elektrischen Leistung durch eine größere Anzahl von Edelgas-Leuchtstoffröhren 32 läßt sich keine wesentliche Steigerung des Wirkungsgrades der zeilenförmigen Ausleuchtung an der zu inspizierenden Oberfläche 12 erzielen, weil die Leuchtdichte solcher Leuchtstoffröhren 32 an sich schon gering ist und eine derartige Anordnung längs eines halben hohlzylindrischen Reflektors 31 nicht die notwendigen geometrischen Verhältnisse für eine eindeutige Zeilen-Fokussierung erbringt. Deshalb ist die Ausstattung der Lichtquelle 18 durch Halogenstrahler 33 mit integriertem Reflektor zweckmäßiger. Wenn diese aus dem Netzteil 30 mit Gleichspannung betrieben werden, können störende optische Schwebungserscheinungen an der inspizierten Oberfläche 12 nicht auftreten. Für die Zeileninspektion kann es sich bei den Halogenstrahlern 33 gemäß Fig. 2 um eine Zeile von nebeneinander angeordneten kleinen Niederspannungs-Lampen oder um einer gegenüber ihrem Reflektor 31 einstellbare röhrenförmige Hochspannungslampe handeln, wenn nicht bei beliebiger Lampenanordnung eine Lichtquerschnittsanpassung mit Lichtleitern vorgesehen ist. Für die Gleichstromspeisung genügt es, im Netzteil 30 eine dreiphasige Wechselspannung gleichzurichten.

In Hinblick auf ihre enorme Hitzeabstrahlung ist eine Zeile von Halogenstrahlern 33 vorzugsweise nicht unmittelbar parallel hinter der Glasplatte 24 der Lichtöffnung 22.6 angeordnet, sondern längs des resultierenden Strahlenweges erheblich dagegen versetzt. Um dennoch den schlanken Querschnitt der Lichtkammer 21.3 im Interesse kompakten Aufbaues der Erfassungseinheit 20 beibehalten zu können, sind die Halogenstrahler 33 abstrahlseitig etwa parallel zur Lichtöffnung 22.6 orientiert, mit Umlenkung ihrer Strahlung an einem Spiegel 34 für senkrechten Durchtritt der Bestrahlungsrichtung 17 durch die Lichtöffnungs-Glasplatte 24. Dadurch ist ein sehr großer Luftraum zwischen den Halogenstrahlern 33 und der Glasplatte 24 vor der Lichtöffnung 22.6 und damit die wünschenswert große Wärmekapazität für die Halogenstrahler-Verlustwärme erzielt.

Ein Gebläse 35 kann durch Zwangszirkulation einem Wärmestau hinter der Glasplatte 24 entgegenwirken. Jedoch verbieten Explosionsschutz-Sicherheitsanforderungen etwa in der holzverarbeitenden Industrie einen Luftaustausch mit der Umgebung außerhalb des hermetisch gekapselten Gehäuses 19. Deshalb ist das Gebläse 35 in der Trennwand 39 zwischen Lichtkammer 21.3 und Sensorkammer 21.4 angeordnet, und zwar möglichst weit oben im Gehäuse 19, also möglichst dicht hinter den Scheiben 24 und somit dicht bei der Wärme-und Lichtquelle 18. Für eine Umluft-Zirkulation 40 weist die Trennwand 39 dem Gebläse 35 gegenüber, also im unteren Bereich des Gehäuses 19, eine Aussparung oder sonstige Öffnungen 41 auf. Die Strömungsrichtung der Umluft 40 ist vorzugsweise so, daß die warme Luft aus der Umgebung der Lichtquelle 18 nicht direkt auf die Kamera (Sensor 15 mit Optik 23) geblasen wird, sondern daß an dem Sensor 15 erst die zuvor der Konvektionsrichtung entgegen durch die Lichtkammer 21.3 abwärtsgedrückte Umluft 40 vorbeistreicht, nachdem sie auf diesem Wege bereits eine gewisse Abkühlung erfahren hat. Im Interesse möglichst guter Wärmeabfuhr aus dem unteren Bereich der Lichtkammer 21.3 ist ein Teil von deren Außenwand 42 als Wärmetauscher 43 mit einer massereichen Platte 44 und etwa rechtwinklig davon abstehenden, parallel zur Längserstreckung der Lichtkammer 21.3 verlaufenden Rippen 45 ausgebildet, oder ein solcher Wärmetauscher 43 ist in eine Aussparung der Außenwand 42 eingefügt. So streicht die durch das Gebläse 35 in der Lichtkammer 21.3 abwärtsgedrückte Umluft-Strömung 40 zur Wärmeabgabe in Längsrichtung durch die Rippen 45 hindurch, ehe sie durch die Öffnungen 41 in die Sensorkammer 21.4 übertritt und dort wieder als abgekühlte Luftströmung 40 hochgedrückt bzw. hochgesaugt wird. Zur wirkungsvolleren Abgabe der aufgenommenen Wärmeenergie an die Umluft außerhalb des hermetisch geschlossenen Gehäuses 19 ist die Wärmetauscher-Platte 44 vorzugsweise auch außerhalb des Gehäuses 19 mit Rippen 45 ausgestattet. Zur Steigerung der Konvektionswärmeübertragung kann diesen ein Ventilationskasten 46 mit einem Ventilator 47 aufgesetzt sein, der zur gesteigerten Wärmeabfuhr eine Zwangsströmung durch die äußeren Rippen 45 hervorruft. Zur Abfuhr der Lichtquellen-Wärme aus dem hermetisch geschlossenen Gehäuse 19 kann aber auch ein Luft-Wasser-Wärmetauscher vorgesehen sein, der dann keines externen Ventilators 47 mehr bedarf; oder als Wärmetauscher 43 wird in die Außenwand 42 ein Klimagerät eingesetzt, dessen Verdampfer im Umluftstrom 40 durch die Lichtkammer 21.3 liegt, während Verdichter und Kondensator des Klimagerätes außerhalb des Gehäuses 19 angeordnet sind. Wenn innerhalb der Lichtöffnung 22.6 eine Anzahl von extern mit Druckluft-Stößen beaufschlagten Düsen 48 in die Lichtkammer 21.3 hineinragen, mittels derer zumindest die Licht-Scheibe 24 (ggf. aber zusätzlich auch die Sensor-Scheibe 24) von aus der Umluftströmung 40 resultierenden Ablagerungen freigeblasen wird, dann wird dadurch die Luftverwirbelung und somit die Wärmeabfuhr noch zusätzlich gefördert.

Eine wesentliche Steigerung des Wirkungsgrades infolge besserer bspw. linienförmiger Fokussierung der Lichtstrahlung auf der Oberfläche 12 ist noch dadurch erzielbar, daß die Halogenlampen-Abstrahlung mittels einer in diesem Beispiel halbzylindrischen Linse 38 zusätzlich fokussiert wird. Für gleiche Ausleuchtung kann dann eine Lichtquelle 18 niedrigerer elektrischer Leistung und damit auch geringerer Verlustwärme eingesetzt werden. Die Linse 38 kann an sich innerhalb der Lichtkammer 21.3 im Strahlenweg zwischen Lichtquelle 18 und Glasplatte 24 angeordnet oder gar mit dem Spiegel 34 kombiniert sein, würde dort allerdings das aus Gründen der Wärmekapazität wünschenswerte Luftvolumen reduzieren. Deshalb kann auch in Betracht gezogen sein, wie in Fig. 2 berücksichtigt, die Linse 38 auf der Glasplatte 24 vor der Lichtkammer 21.3 anzuordnen oder diese Glasplatte direkt durch die Linse 38 zu ersetzen.

Die kompakte, in sich voll funktionstüchtige Erfassungseinheit 20 kann leicht in eine Fertigungsanlage integriert werden, etwa am Ausgang einer Hobelmaschine 36 unter der Rollenbahn 37 zum Abtransport von Werkstücken 11 in Form von Profilbrettern, deren gehobelte Unterseite zur Güteklassifizierung zu inspizieren ist. Dabei kommt das völlig geschlossene Gehäuse 19 Anforderungen an Einsatz in explosionsgefährdeter Umgebung entgegen. Da eine Justage der Aufnahme- und Betrachtungsrichtungen 16, 17 schon beim Einbau des Sensors 15 und der Lichtquelle 18 erfolgt, werden bei der Integration dieser in sich abgeglichenen Erfassungseinheit 20 in den Fabrikationsgang keine aufwendigen weiteren Justagevorgänge mehr erforderlich.

## Patentansprüche

1. Erfassungseinheit (20) für die optronische Inspektion einer Oberfläche (12), insbesondere zur Klassifikation schnell bewegter Werkstücke (11), mittels eines quer zur Bewegungsrichtung auf die Oberfläche (12) gerichteten Sensors (15),
dadurch gekennzeichnet,
daß sich in einem Gehäuse (19) parallel zu einer Sensorkammer (21.4) eine Lichtkammer (21.3) erstreckt, deren quer zur Bestrahlungsrichtung (17) orientierte Lichtöffnung (22.6) stumpfwinklig geneigt ist gegenüber der quer zur Aufnahmerichtung (16) orientierten Blicköffnung (22.5) der Sensorkammer (21.4).

2. Einrichtung nach Anspruch 1,
dadurch gekennzeichnet,
daß als Sensor (15) in der Sensorkammer (22.4) eine Zeilenkamera mit Tele-Zwischenring für ihre Optik (23) in möglichst großem Abstand von der Blicköffnung (22.5) angeordnet ist.

3. Einrichtung nach Anspruch 1 oder 2,
dadurch gekennzeichnet,
daß in der Lichtkammer (21.3) hinter der von einer Glasplatte (24) hermetisch verschlossenen Lichtöffnung (22.6) als Lichtquelle (18) eine Anzahl von Leuchtstoffröhren (32) auf der konkaven Seite eines halbzylindrischen Hohlspiegels als gestrecktem Reflektor (31) angeordnet ist, die an eine Hochfrequenz-Speisung angeschlossen sind.

4. Einrichtung nach Anspruch 1 oder 2,
dadurch gekennzeichnet,
daß in der Lichtkammer (21.3) hinter einer deren Lichtöffnung (22.6) hermetisch abschließenden Glasplatte (24) als Lichtquelle (18) Halogenstrahler (33) in Form von wenigstens zwei nebeneinander angeordneten Niederspannungs-Lampen angeordnet sind, die an eine Gleichspannungs-Speisung angeschlossen sind.

5. Einrichtung nach Anspruch 1 oder 2,
dadurch gekennzeichnet,
daß in der Lichtkammer (21.3) hinter einer deren Lichtöffnung (22.6) abschließenden Glasplatte (24) als Lichtquelle (18) wenigstens eine Hochleistungs-Halogenröhre angeordnet ist, die gegenüber ihrem hohlzylindrischen Reflektor einstellbar und über einen Gleichrichter aus einem dreiphasigen Wechselspannungsnetz gespeist ist.

6. Einrichtung nach Anspruch 4 oder 5,
dadurch gekennzeichnet,
daß wenigstens eine Strahl-Umlenkeinrichtung in der Lichtkammer (21.3) zwischen dem Halogenstrahler (33) und der Lichtöffnung (22.6) angeordnet ist.

7. Einrichtung nach Anspruch 4 oder 5,
dadurch gekennzeichnet,
daß im Strahlengang des Halogenstrahles (33) eine Linse (38) angeordnet ist.

8. Einrichtung nach einem der vorangehenden Ansprüche,
dadurch gekennzeichnet,
daß sie ein explosionssicher ausgelegtes Gehäuse (19) aufweist.

9. Einrichtung nach einem der vorangehenden Ansprüche, dadurch gekennzeichnet, daß im Innern ihres Gehäuses (19) ein Gebläse (35) für eine Zwangs-Umluft (40) durch die Lichtkammer (21.3) längs eines Wärmetauschers (43) und durch die Sensorkammer (21.4) vorgesehen ist.

10. Einrichtung nach einem der vorangehenden Ansprüche, dadurch gekennzeichnet, daß sie mit vom Innern des Gehäuses (19) gegen Glasplatten (24) gerichteten Düsen (48) zur externen Beaufschlagung mit gepulster Druckluft zum Freiblasen der Glasplatten (24) ausgestattet ist.
